# EUROPÄISCHE PATENTANMELDUNG

(11) **EP 1 922 925 A2**
(43) Veröffentlichungstag der Anmeldung: **21.05.2008**
(21) Anmeldenummer: 07010363.5
(22) Anmeldetag: 24.05.2007
(51) Int. Cl.: A01N 31/08

(54) **Flüssige Desinfektionsmittelzusammensetzung und deren Verwendung**

(30) Priorität: 30.05.2006 DE 102006025180
(71) Anmelder: Gerhard Ruff GmbH, 87700 Memmingen (DE)
(72) Erfinder: Widulle, Herbert, Dr., 22547 Hamburg (DE); Krämer, Albrecht, Dr., 68782 Brühl (DE); Dückminor, Harald, 87700 Memmingen (DE)
(74) Vertreter: Müller, Frank Peter

(57) **Zusammenfassung**

Gegenstand der Erfindung ist eine flüssige Desinfektionsmittel-Zusammensetzung enthaltend zumindest eine PhenolVerbindung und organische Basen in einem gegenüber der Phenol-Verbindung stöchiometrischen Überschuss und deren Verwendung.

## Beschreibung

Gegenstand der Erfindung ist eine flüssige Desinfektionsmittelzusammensetzung enthaltend zumindest eine Phenol-Verbindung und zumindest eine organische Base und deren Verwendung insbesondere zur Vernichtung von Dauerformen von Endoparasiten.

Die Vernichtung von Endoparasiten, insbesondere deren Dauerformen, ist seit langem ein Aufgabengebiet von Desinfektionsmittelzusammensetzungen, insbesondere in der Landwirtschaft. So sind seit vielen Jahren Kokzidieninfektionen ebenso wie Infektionen mit Kryptosporidien bei Nutztieren ein Problem. Kokzidien sind einzellige Lebewesen, die in einer Wirtszelle eine ungeschlechtliche Vermehrung (Schizogonie) durchführen und die Zelle dabei zerstören. Nach der ungeschlechtlichen Vermehrung bilden sich Geschlechtszellen (Gametogonie). Die befruchtete weibliche Zelle umgibt sich mit einer Hülle (Oozyste) und wird mit dem Kot ausgeschieden. In der Außenwelt kommt es wieder zu einer ungeschlechtlichen Vermehrungsphase (Sporogonie), bei der das infektiöse Stadium gebildet wird, die versporte Oozyste.

Die Kokzidiose gehört zu den bedeutendsten parasitären Erkrankungen von Nutztieren, da sie praktisch in jeder Haltungs- und Nutzungsform vorkommt. Kokzidien sind Einzeller, die in den Zellen der Darmschleimhaut (Darmkokzidiose) oder der Gallengänge (Leberkokzidiose) schmarotzen. Sie entwickeln sich in einem mehrphasigen, komplizierten Zyklus, an dessen Ende die Oozysten mit dem Kot ausgeschieden werden. Diese reifen innerhalb von ein bis sechs Tagen in der Einstreu und werden dann als infektionstüchtige Stadien von den Tieren aufgenommen. Die Oozysten sind sehr widerstandsfähig und unter günstigen Bedingungen über mehrere Monate infektiös.

Es ist bekannt, dass eine große Anzahl von Tieren im Stall, die Stallfütterung mit Grünfutter, insbesondere bei Rindern, genauso wie die Bodenhaltung oder Freilandhaltung bei Hühnern derartige Infektionen begünstigen. Bei infizierten Tieren reichen die Krankheitssymptome von nicht bemerkbar, über Durchfall und schweren, blutigen Durchfall bis hin zum Tode der infizierten Tiere. Dabei sind Jungtiere besonders infektionsgefährdet und haben zusätzlich, wenn sie infiziert werden, eine hohe Todesrate.

Infizierte Tiere scheiden innerhalb kürzester Zeit eine Vielzahl von sporulierten Oozysten von Kokzidien oder Kryptosporidien aus, so dass sich theoretisch innerhalb von wenigen Tagen alle Tiere eines Stalles infizieren können, wenn sie nur von wenigen Kokzidien oder Kryptosporidien oder auch nur von einer Oozyste infiziert wurden. Auch wenn keine Krankheitsymptome wie Durchfall, blutiger Durchfall oder Folgen wie Tod eines Tieres deutlich werden, so ist doch in jedem Fall die Leistung des Tieres in Bezug auf Gewichtszunahme oder Milchleistung verringert. Bei Säugetieren kann noch hinzukommen, dass die Fertilitätsrate abnimmt.

Auch die Kryptosporidien (Cryptosporidium) sind einzellige Parasiten, die Kälber und andere Wirbeltiere infizieren. Im Darm des Wirtes werden aus den Oozysten die Sporozoiten frei, die in den Bürstensaum der Darmzellen eindringen, sich dort in einer parasitophoren Vakuole einnisten und sich ungeschlechtlich über verschiedene Stadien zu Geschlechtszellen (Gamonten) entwickeln. Durch die nachfolgende geschlechtliche Vermehrung entsteht eine Zygote und schließlich eine Oozyste. Es werden zwei Typen von Oozysten gebildet: rund 80 % sind dickwandig und werden mit dem Kot ausgeschieden, die restlichen 20 % sind dünnwandig und verbleiben im Wirt, wo sie eine erneute Infektion des Wirtes auslösen. Die Oozysten sind sehr widerstandsfähig und können unter günstigen Bedingungen (Feuchtigkeit und Temperatur) mehrere Monate infektiös bleiben. Sie sind unempfindlich gegenüber beinahe allen Desinfektionsmitteln.

Oozysten von Kokzidien und auch von Kryptosporidien werden mit der Nahrung oder dem Trinkwasser vom Tier aufgenommen. Dabei begünstigen verschmutzte Ställe die Infektion sehr, da in verschmutzten Ställen die Tiere unweigerlich mit Kot in Berührung kommen und die Nasen vom Fäkalgeruch so blockiert sind, dass Feinheiten im Geruch der Umgebung nicht mehr wahrgenommen werden können, wie es für einen natürlichen Schutz der Tiere vor Fäkalinfektionen notwendig ist.

Besonders gefährlich ist das Ausbringen von Fäkalien wie Gülle auf Grünland und das Verfüttern des Grases, nachdem es einige Wochen später gemäht worden ist. Die sporulierten Oozysten von Kokzidien und Kryptosporidien können diesen Zeitraum in der Regel überdauern, ohne signifikant an Infektiösität zu verlieren. Ein derartiges Verhalten ist aber durch die moderne Massentierhaltung wirtschaftlich notwendig für Rinder, so dass eine Infektion von Kälbern mit den entsprechenden Erkrankungen oft die natürliche Folge ist.

Die einzige Abhilfe, diesen Zyklus des immer wieder erneuten Einschleppens der Endoparasiten zu unterbrechen, besteht im regelmäßigen und gründlichen Reinigen und Desinfizieren des Stalles. Dabei sind die meisten handelsüblichen Desinfektions- und Reinigungsmittel gegen sporulierte Oozysten von Kokzidien und Kryptosporidien nicht wirksam, so dass Spezialprodukte notwendig werden.

Die Deutsche Veterinärmedizinische Gesellschaft (DVG) hat ein Verfahren entwickelt, mit dem Produkte auf ihre Wirksamkeit gegenüber den Dauerformen von Kokzidien und Kryptosporidien getestet werden können. Bei diesem Test werden Hühner mit desinfizierten Oozysten infiziert. Danach wird im Kot der Tiere kontrolliert, wie stark die Zahl der Oozysten im Stuhl im Vergleich mit einer Referenzprobe abgenommen hat. Für den Test werden *eimeria tenella* verwendet, die im Hühnerdarm parasitieren, da Hühner als Versuchstiere relativ einfach zu halten sind und da die DVG davon ausgeht, dass die sporulierten Oozysten aller Kokzidienarten und Kryptosporidienarten gegenüber Chemikalien vergleichbar oder weniger resistent sind.

Um die Rate an Kokzidien- oder Kryptosporieninfektionen so gering zu halten, dass sie wirtschaftlich keine Rolle mehr spielt und um die Anzahl der Oozysten pro Infektion so gering zu halten, dass die Tiere möglichst nicht sichtbar erkranken, werden deshalb Tierställe in regelmä-βigen Abständen mit einem Mittel und einem Verfahren desinfiziert, das von der DVG geprüft ist. Die Desinfektion der Ställe muss dabei mit relativ gefährlichen Chemieprodukten erfolgen, da die zu bekämpfenden Oozysten Dauerformen von einzelligen Tieren sind und damit in ihrem Aufbau und ihren biochemischen Reaktionen dem menschlichen Organismus ähnlicher sind als zum Beispiel Bakterien oder Pilze.

Bis vor zehn Jahren war es eine gesicherte Erkenntnis, dass ein Mittel zum Abtöten von Dauerformen von Kryptosporidien oder Kokzidien Verbindungen des zweiwertigen Schwefels in der Oxidationsstufe -2 enthalten muss. Deshalb enthielten die üblichen Mittel neben anionischen Tensiden und 4-Chlor-3-Methylphenol (CMK) noch Chloroform und Schwefelkohlenstoff. Von Nachteil ist, dass diese Mittel nicht nur sehr leicht brennbar sind, ein Funke genügte häufig, um ein Stallgebäude, das gerade desinfiziert wurde, in Flammen zu setzen, sondern sie waren auch noch stark giftig. Auch unterhalb der akuten Toxizität schädigten sie Nerven und Hirn von Personen, die diese Mittel anwenden mussten. Die Wirksamkeit dieser Mittel wurde begründet mit der guten Penetrationsfähigkeit des Schwefelkohlenstoffes und des Chloroforms. Die Mittel waren neutral eingestellt.

Eine deutliche Verbesserung in den Anwendungseigenschaften brachten die sauren Mittel auf Basis CMK, die neben keratolytisch wirkenden Säuren oder Säureestern noch anionische Tenside und Reduktionsmittel enthalten. Als Reduktionsmittel können dabei die Ester der Thiomilchsäure oder auch reduzierend wirkende Carbonsäure verwendet werden. Als Beispiel für reduzierend wirkende Carbonsäuren werden hier wie folgt beispielhaft erwähnt: Brenztraubensäure, Maleinsäure, Glyoxylsäure, Fumarsäure, Brenzschleimsäure, Pyrrolidoncarbonsäure, Ascorbinsäure, Zimtsäure oder Sorbinsäure, ohne dass behauptet wird, diese würden zur Zeit wirklich in Mitteln zur Abtötung von Dauerformen von Kokzidien und Kryptosporidien verwendet werden.

In einigen Produkten werden auch reduzierend wirkende Carbonsäureester verwendet. Diese Wirkstoffe, wie zum Beispiel Thiomilchsäureethylester, sind auch aus der Haarkosmetik bekannt. In Dauerwellprodukten und Entkräuselungsprodukten lösen sie während der Einwirkzeit die Schwefelbrücken zwischen den Cysteinbausteinen der Proteine der Haare und ermöglichen so ein Kräuselung oder Glättung. In den Desinfektionsmitteln zur Bekämpfung von Kokzidien und Kryptosporidien lösen diese Reduktionsmittel ebenso wie die reduzierenden keratolytisch wirkenden Säuren die Schwefelbrücken zwischen den Cysteinbausteinen der Eiweißgele der Oozysten und der Eier in den Oozysten. Die Gebrauchsverdünnung dieser Mittel ist so sauer, dass die Porenproteine in der Zellwand der sporulierten Oozysten denaturiert werden und durch die Löcher in der Zellwand dann das CMK in die Oozysten penetrieren kann.

Wird das Produkt neutralisiert, dann besteht die Möglichkeit, dass die keratolytische Wirkung soweit abnimmt, dass nicht ausreichend Wirkstoff in die Oozysten gelangen kann, um die Eier darin abzutöten.

Der Nachteil dieser sauren phenol-haltigen Zusammensetzungen ist ihr schlechtes Penetrationsvermögen, so dass die Sicherheit bei der Anwendung der Produkte nur gegeben ist, wenn der zu desinfizierende Stall gründlich gereinigt worden ist und keine verdeckten Ecken oder Winkel hat, in denen unter dem Schmutz noch Dauerformen von Kokzidien oder Kryptosporidien infektiös bleiben konnten. Zum zweiten werden diese Mittel durch alkalische Bauteile wie Beton inaktiviert, wobei der Beton zerstört wird. Die alkalische Gülle und der alkalische Harn der Tiere mit ihrer großen Pufferwirkung stehen ebenfalls der Wirksamkeit des Desinfektionsmittels entgegen.

In letzter Zeit ist ein Mittel zur Bekämpfung der Kryptosporidiose und Kokzidiose auf den Markt gekommen, das in neutraler Lösung neben CMK noch Eugenol (4-Hydroxy-3-methoxy-1-allyl-benzol) enthält. Dieses Mittel zeigt nicht nur, wie auch viele saure Produkte eine niedrige Lysisrate im Sporulationshemmtest und es konnte bisher auch noch keine ausreichende Verhinderung einer Infektion im Tierversuch der DVG nachgewiesen werden. Da nur ein erfolgreich bestandener Tierversuch beweist, dass das Mittel wirksam ist, können zur Wirksamkeit dieses Mittels bisher keine zuverlässigen Aussagen gemacht werden.

Die Biozidverordung führte zu einer Verringerung der Anzahl der einsetzbaren bioziden Wirkstoffe. Deshalb wird häufig versucht, Oozysten und sporulierte Oozysten von Kokzidien und Kryptosporidien durch chlorhaltige Lösungen wie Natriumhypochlorit abzutöten. Diese in der Regel biozid wirkenden Stoffe sind als technische Chemikalien in großer Menge preisgünstig zu beziehen. Leider hat sich gezeigt, dass Natriumhypochlorit oder Kaliumhypochlorit nicht gegen Kokzidien oder Kryptosporidien wirken. Es kann zwar eventuell eine Lysis der äußeren Hülle unter dem Mikroskop festgestellt werden, aber eine Abtötung der eigentlichen Eier innerhalb der Oozyste findet in der Regel nicht statt. Eben so wenig ist die Verwendung von reiner Kalilauge oder Natronlauge erfolgreich, da auch bei diesen Chemikalien zwar die äußere Hülle der Oozysten aufgelöst werden kann, die eigentlichen infektiösen Organismen aber nicht angegriffen werden.

Es besteht somit ein Bedürfnis nach Desinfektionsmitteln, die durch Fäkalien und Kot nicht inaktiviert werden, die die Hülle von Oozysten sicher lysieren und die im Tierversuch eine Verhinderung der Infektion nachweisbar bewirken. Es besteht besonderer Bedarf an Produkten, die durch Beton, Fäkalien und Kot nicht inaktiviert werden, die Oozysten zuverlässig töten, sicher in der Handhabung sind und im Einklang mit der Biozidrichtlinie sind, da nur solche Mittel innerhalb der Europäischen Union verkehrsfähig sind.

Überraschend und auch für den Fachmann völlig unerwartet hat es sich gezeigt, dass es möglich ist, mit alkalischen phenolischen Lösungen gemäß Anspruch 1 wirksam die Infektion von Wirbeltieren mit Kokzidien und Kryptosporidien sowie anderen einzelligen Parasiten zu verhindern. Gegenstand der Erfindung sind somit Desinfektionsmittel gemäß Anspruch 1 sowie deren Verwendung nach dem weiteren unabhängigen Anspruch. Bevorzugte Ausführungsformen der Erfindung sind Gegenstand der Unteransprüche oder nachfolgend beschrieben.

Die erfindungsgemäßen wässrigen phenolischen Lösungen, in denen zusätzlich zu der Phenol-Verbindung organische Basen enthalten sind, vorzugsweise aber keine anorganischen Basen, bewirken nicht nur eine sichere Lysis von Dauerformen von Kokzidien, sondern verhindern auch eine Infektion von Tieren durch Oozysten von Kokzidien. Das Ausmaß der Wirksamkeit und die Sicherheit der Verhinderung einer Infektion ist sowohl von der Wirkstoffkonzentration als auch von der Einwirkdauer abhängig.

Dabei enthalten die erfindungsgemäßen alkalischen phenolischen wässrigen Lösungen anders als die wässrigen alkalischen Lösungen nach dem Stand der Technik vorzugsweise keine Phenolate von anorganischen Basen wie Kalium, Natrium, Calcium oder Ammonium als aktiven Wirkstoff. Diese wässrigen Lösungen von Phenolen, die als Hilfsstoffe anorganische Basen enthalten, können zwar eine Lysis von Oozysten bewirken, sie können eine Infektion von Tieren durch Oozysten, die mit diesen Produkten behandelt worden waren, aber nicht ausreichend sicher verhindern. Bereits der Zusatz von diesen anorganischen Basen zu ansonsten erfindungsgemäßen Produkten kann die Wirksamkeit gegenüber Kokzidiendauerformen verringern oder verhindern.

Phenol-Verbindungen im Sinne dieser Erfindung sind alle Verbindungen welche mindestens eine Hydroxylgruppe an einen aromatischen Ring aufweisen, insbesondere solche Verbindungen die nicht mehr als zwei Zyklen aufweisen. Geeignete Phenol-Verbindungen sind z.B. Phenol, 4-Chlor-3-kresol, Biphenylol, Chlorofen, Thymol, Brommethylkresol, Kresole, Isopropyl-o-kresol, Isopropyl-m-kresol, 4-Chlor-3,5-dimethylphenol, 3-Methyl-4-(1-methylethyl)phenol, 4-Chlorthymol, 4-Hexyl-1,3-dihydroxybenzol oder auch Hydrochinon bzw. deren Mischungen. Es können aber auch Biphenylol oder Thymol verwendet werden. Wichtig sind die phenolischen Eigenschaften der Verbindungen. Vorteilhaft ist eine begrenzte, geringe Wasserlöslichkeit. Die Verbindungsklasse wird genauer beschrieben in dem Standardwerk "Praxis der Desinfektion, Sterilisation, Konservierung" von K. H. Wallhäuser, wobei die dort gewählten Beispiele auch nur beispielhaft sind.

Für die Abtötung der Sporozoiden in den Oozysten sind ungefähr 0,2 bis zu 2,5 Gew.% Phenol-Verbindung in der Gebrauchszusammensetzung gewünscht, bevorzugt werden Lösungen mit 0,5 bis 1,5 Gew.% Phenol-Verbindung besonders bevorzugt 0,6 bis 0,8 Gew.%. Natürlich wird man bevorzugt Phenol-Verbindung verwenden, die für den Einsatz und Produktgruppe 3 des Anhangs V der Biozidprodukterichtlinie von 1998 der EU endgültig zugelassen sind. Die Einschränkung auf eine sehr geringe Anzahl an notifizierten phenolischen Wirkstoffen lässt eine Ausführung mit 4-Chlor-3-methylphenol besonders vorteilhaft erscheinen, auch wenn Ausführungen, die auf Basis Biphenylol, Thymol oder Eugenol aufgebaut sind, aus Umweltschutzgründen besonders bevorzugt sind.

Als organische Basen können in diesen Lösungen alle organischen Basen verwendet werden, die in Wasser einen pH-Wert zwischen größer 7 und 14 ergeben. Bevorzugt sind Basen, die einen pH-Wert von 8 bis 12, besonders bevorzugt solche, die einen pH-Wert von 9 bis 11 der erfindungsgemäßen Zusammensetzung erzeugen.

Bevorzugt sind dabei organische Basen, deren pKs-Wert so gering ist, dass in Lösung die als Wirkstoffe verwendeten Phenol-Verbindungen ein Proton an die Basen oder das Lösemittel abgeben. Dabei ist eine unbegrenzte Löslichkeit der organischen Basen in Wasser nicht erforderlich. Wichtig ist nur, dass etwaige Konzentrate, aus denen durch Verdünnung die eigentlichen wirksamen Lösungen erstellt werden, lagerstabil sind.

Dabei sind klare Lösungen für die Konzentrate bevorzugt, obgleich auch Emulsionen denkbar sind. Die Gebrauchslösungen sind vorzugsweise klare Lösungen, zumindest aber stabile Emulsionen, insbesondere Mikroemulsionen. Entscheidend ist, dass die Stabilität der Lösungen für Lagerung und sichere Verwendung ausreichend ist.

Die erfindungsgemäßen Gebrauchslösungen müssen enthalten neben mindestens einer Phenol-Verbindung eine organische Base aus der Gruppe der primären, sekundären, tertiären oder auch aromatischen Amine. Besonders geeignet sind Oligo- und Polyamine, die eine gute Wasserlöslichkeit mit einem niedrigen Dampfdruck verbinden und so das Inhalationsrisiko für den Verwender minimieren. Als Beispiele seien hier die besonders bevorzugten Verbindungen Pentamethyldiethylentriamin und Pentamethyldipropylentriamin zu nennen.

Eine weitere bevorzugte Verbindungsgruppe sind die alkylierten Dipropylentriamine. Als Beispiele sind hier die Cocosdipropylentriamine und die Octylpropylentriamine zu nennen. Die Alkyldipropylentriamine sind insbesondere Mischungen von Verbindungen, die eine tertiäre und zwei primäre Aminogruppe enthalten und solchen, die zwei sekundäre und nur eine primäre Aminogruppe enthalten. Beispiele für organische Basen, die eine ausreichende Basizität haben und trotz einer nicht unbegrenzten Wasserlöslichkeit als Basen in den erfindungsgemäßen Produkten verwendet werden können, sind Fettamine, (mit größer 7 Kohlenstoffatomen) so zum Beispiel Octylamin, Ethylhexylamin, Dodecylamin und eine Mischung von Tridecylaminen. Es können von diesen Fettaminen sowohl die primären, die sekundären als auch die tertiären in den erfindungsgemäβen Produkten Verwendung finden.

Die organischen Basen werden in den Gebrauchslösungen in Konzentrationen zwischen 0,1 Gew.% und bis 10 Gew.% verwendet, dabei werden Konzentrationen zwischen 0,5 und 5,0 Gew.% bevorzugt und Konzentrationen zwischen 0,7 % und 1,5 % besonders bevorzugt.

Dabei ist ein Mischungsverhältnis zwischen dem Amin oder der Mischung von Aminen und dem Phenol oder den Phenolen notwendig, bei der die Anzahl der basischen Gruppen, insbesondere der Aminogruppen, größer ist als die Anzahl der Hydroxylgruppen an dem Phenol oder den Phenolen.

Besonders bevorzugt sind Mischungsverhältnisse, bei denen die Anzahl der basischen Gruppen, insbesondere der Aminogruppen doppelt so groß ist und besonders bevorzugt sind Mischungen, bei denen die Anzahl der Aminogruppen in der Lösung den Anteil der phenolischen Hydroxylgruppen um den Faktor drei oder mehr übertrifft.

Neben den Aminogruppen können auch andere funktionelle Gruppen in das Molekül inkorporiert sein. So ist zum Beispiel die Verwendung von Aminoalkoholen wegen ihrer hohen Siedepunkte und der hohen Basizität bevorzugt. Besonders bevorzugt ist eine Kombination von primären, sekundären oder tertiären Aminoalkohlen mit primären, sekundären oder tertiären Polyaminen. Ganz besonders bevorzugt sind polymere Aminoalkohole, wobei diese tertiäre, sekundäre oder primäre Aminogruppen enthalten können.

Neben den bereits genannten Verbindungsgruppen können die Produkte noch Farbstoffe, Parfümöle, Stellmittel und Tenside enthalten.

Nach dem Stand der Technik müssen Mittel, die gegen die Dauerformen von Kokzidien, Ascariden und anderen Endoparasiten wirken sollen, Reduktionsmittel enthalten. Dies können Schwefelverbindungen wie Thioharnstoff, Schwefelkohlenstoff, Thiokresole, Thiomilchsäure oder ihre Ester oder auch organische oder anorganische Sulfite sein.

Ebenfalls möglich ist die Verwendung von reduzierenden Carbonsäure oder ihren Estern. An dieser Stelle seien Ascorbinsäure, Brenztraubensäure, Brenzschleimsäure, Glyoxylsäure, Kojisäure, Maleinsäure, Weinsäure oder Zitronensäure oder ihre Ester beispielhaft genannt. Bei der Verwendung von Säuren in den erfindungsgemäßen Produkten ist darauf zu achten, dass die Menge an organischer Base anteilmäßig erhöht wird.

Besonders bevorzugt ist die Verwendung von organischen Reduktionsmitteln, die in der Desinfektionslösung keine Erniedrigung des pH-Wertes hervorrufen. Beispielhaft sind an dieser Stelle als organische Reduktionsmittel, die keine pH-Änderung herbeiführen, zu nennen, Eugenol, Hydrochinon, Naphtochinon, Anthrachinon und Benzylalkohol, insbesondere Eugenol.

Neben den Stoffen, die für die sichere Funktion des Mittels notwendig sind, können die erfindungsgemäßen Mittel noch Stoffe enthalten, die die Wirkung verbessern oder den Umgang mit der Chemikalie erleichtern. Zu diesen Hilfsstoffen zählen Tenside. Besonders geeignet sind alkalistabile Tenside.

Die besonders geeignete Verwendung von Alkylpolyglucosiden ist nicht nur in der Rohstoffsituation begründet, sondern auch in der besonderen Stabilität dieser Verbindungen gegen Alkalien, aber nicht notwendigerweise in einer verbesserten Wirksamkeit gegenüber anderen Tensiden wie zum Beispiel Cocosfettsäurediethanolamin oder dem Triethanolaminsalz des sekundären Alkansulfonates.

Zur Verbesserung des Netzvermögens und eines besseren Schmutztragevermögens in der Gebrauchslösung sind neben den bereits genanten Alkylpolyglucosiden endgruppenverschlossene Polyalkoxyfettalkoholether besonders geeignet.

Anionische Tenside können als freie Säuren oder als Aminsalze in den erfindungsgemäßen Produkten Verwendung finden. Als anionische Tenside seien hier beispielhaft genannt, ohne dass die Aufzählung abschließend sein soll: Ethercarbonsäuren, sekundäre Alkansulfonate, Cumolsulfonate, Alkylsulfate und Alkylethersulfate. Nicht gewünscht sind Tenside, welche dissoziierende Natrium- oder Kaliumsalze sind.

Ebenfalls möglich ist die Verwendung von Alkylaminen, die eine reinigende Wirkung entfalten können. Als Beispiele seien hier das Dodecyldipropylentriamin und das Octyldipropylentriamin erwähnt, wie sie zum Beispiel von der Firma Lonza aus Basel vertrieben werden.

Die Verwendung von amphoteren Tensiden, die theoretisch ebenfalls möglich ist, wird nur dadurch begrenzt, dass die üblichen Handelsqualitäten Metallsalze wie Natriumchlorid aus der Produktion enthalten und mit Alkali wie Natriumhydroxid neutralisiert sind.

Neben den bereits genannten Inhaltsstoffen können die erfindungsgemäßen Produkte noch die üblichen Lösevermittler, Korrosionsinhibitoren, Farbstoffe, Riechstoffe und Stellmittel (= Lösevermittler) enthalten, um zum Beispiel ein Konzentrat oder auch die Gebrauchslösung klar zu stellen oder auch um eine Suspension oder Emulsion zu stabilisieren. Zu diesen Stellmitteln gehören beispielhaft, aber nicht ausschließlich Butanon, Methylacetat, Ethylacetat, Aceton, Ethanol, Propanol.

Die Erfindungsgemäße Desinfektionsmittelzusammensetzung ist vorzugsweise im Wesentlichen frei (kleiner 1000 ppm) von Metallsalze der I und/oder II Hauptgruppe in der Summe und unabhängig hiervon von kleiner 200 ppm der III Haupt-gruppe des Periodensystems.

Die Erfindung soll an Hand der in Tabelle 1 gezeigten Beispiele erläutert werden:

**Tabelle 1**

| Zusammensetzung | 1 | 2 | 3 | 4* | 5 |
|---|---|---|---|---|---|
| Chlormetakresol | 25,00 | 25,00 | 0,75 | 25,00 | 20 |
| (CH₃) ₅ (CH₂CH₂) ₂N₃ Pentamethyldiethylentriamin | | 24,00 | | | 26 |
| CH₃(CH)₄N N-Methy-Imidazol | 17,00 | | 0,81 | 28,00 | |
| HOCH₂CH₂NH₂ | 43,00 | 35,00 | | | 35 |
| Alkylpolyglucosid | 5,00 | 16,00 | 0,87 | | 15 |
| Methylacetat | | | 0,11 | | |
| Campfer | | | 0,09 | 3,00 | |
| Aceton | 9,00 | | | 11,00 | |
| Na-Dioctylsulfosuccinat | | | | 10,00 | |
| Ethanol | | | 15,00 | 5,00 | |
| Kaliumhydroxid | | | 0,08 | 2,50 | |
| Wasser | | | 82,79 | 2,50 | |
| Butylhydroxyanisol | 1,00 | | | | |
| Eugenol | | | | | 4 |
| pH-Wert 3 % in Wasser | 9,20 | 9,30 | 9,80 | 9,90 | |
| Lysisrate 3 % 2h in % | 93,8 | 83,6 | 82,7 | 99,4 | |
| Wirksamkeit im reduzierten Tierversuch bei 3 % 4h in % | 82,9 | | | keine | 97,6 |
| Wirksamkeit im Tierversuch nach DVG bei 4% 2h in % | | | | | 96 |

| | | | | | |
|---|---|---|---|---|---|
| *Vergleichsbeispiel | | | | | |

## Patentansprüche

1. Flüssige Desinfektionsmittelzusammensetzung enthaltend
(a) zu 0,5 bis 40 Gew.% zumindest eine Phenol-Verbindung und
(b) zu zumindest 1,5 Gew.% zumindest eine organische Base, wobei die organische Base in Bezug auf die sauren Gruppen der Phenol-Verbindung in einem stöchiometrischen Überschuss vorliegt,
und die Desinfektionsmittelzusammensetzung einen pH-Wert von größer 7 aufweist.

2. Desinfektionsmittelzusammensetzung gemäß Anspruch 1, **dadurch gekennzeichnet, dass** die organischen Basen eine oder mehrere Amin-Verbindungen sind bzw. enthalten.

3. Desinfektionsmittelzusammensetzung gemäß Anspruch 2, **dadurch gekennzeichnet, dass** die Amin-Verbindungen zu mehr als 25 Mol%, bezogen auf die Summe der Amin-Verbindungen, mehr als eine Amino-Gruppe aufweisen.

4. Desinfektionsmittelzusammensetzung gemäß Anspruch 2, **dadurch gekennzeichnet, dass** die Amin-Verbindungen zu mehr als 25 Mol%, bezogen auf die Summe der Amin-Verbindungen, weiterhin mindestens eine Hydroxy-Gruppe aufweisen.

5. Desinfektionsmittelzusammensetzung gemäß einem der vorhergehenden Ansprüche, **dadurch gekennzeichnet, dass** die Phenol-Verbindung einfach oder mehrfach (C1- bis C4-)-alkylsubstituierte Chlorphenole - wie Kresole, 4-Chlor-3,5-dimethylphenol, 4-Chlorthymol, und/oder Chlormetakresole-, Chlorofen, Biphenylol, Eugenol, 4-Hexyl-1,3-dihydroxybenzol, ortho-Phenylphenol und/oder Thymol ist oder enthält, insbesondere para-Chlormetakresol und/oder ortho-Phenylphenol.

6. Desinfektionsmittelzusammensetzung gemäß zumindest einem der Ansprüche 2 bis 5, **dadurch gekennzeichnet, dass** die Amin-Verbindungen flüssige tertiäre Amine enthalten.

7. Desinfektionsmittelzusammensetzung gemäß zumindest einem der Ansprüche 2 bis 5, **dadurch gekennzeichnet, dass** die Amin-Verbindungen einen Siedepunkt größer 180°C aufweisen und bei 25°C in den relevanten Konzentrationen vollständig in Wasser löslich sind.

8. Desinfektionsmittelzusammensetzung gemäß einem der vorhergehenden Ansprüche, **dadurch gekennzeichnet, dass** die Zusammensetzung weiterhin ein Reduktionsmittel enthält, insbesondere in Form zumindest einer ungesättigten organischen Verbindung.

9. Desinfektionsmittelzusammensetzung gemäß Anspruch 8, **dadurch gekennzeichnet, dass** das Reduktionsmittel Eugenol, Hydrochinon, Anthrachinon, Naphtochinon und/oder Arbutin ist, zusätzlich und unterschiedlich von (a) oder dessen Bestandteilen, insbesondere zusätzlich Eugenol.

10. Desinfektionsmittelzusammensetzung gemäß Anspruch 8, **dadurch gekennzeichnet, dass** die Zusammensetzung als Reduktionsmittel Schwefel-Verbindungen enthält, insbesondere zweiwertige Schwefel-Verbindungen der Oxidationsstufe -2.

11. Desinfektionsmittelzusammensetzung gemäß Anspruch 8, **dadurch gekennzeichnet, dass** die Zusammensetzung weiterhin ungesättigte organische Säuren oder deren Derivate enthält, insbesondere Maleinate, 2-Ketopropionate, neutralisierte Kojisäure und/oder Furfurylcarboxylate.

12. Desinfektionsmittelzusammensetzung gemäß einem der vorhergehenden Ansprüche, **dadurch gekennzeichnet, dass** die Zusammensetzung weiterhin nicht-ionische und/oder anionische Tenside enthält, insbesondere Alkylpolyglucoside.

13. Desinfektionsmittelzusammensetzung gemäß einem der vorhergehenden Ansprüche, **dadurch gekennzeichnet, dass** diese eine Phenol-Verbindung, unterschiedlich von Eugenol, insbesondere Chlormetakresol und/oder ortho-Phenylphenol, ein Hydroxylamin, ein tertiäres Amin, ein Tensid und zusätzlich Eugenol enthält.

14. Wässrige Desinfektionsmittelzusammensetzung als Gebrauchszusammensetzung, **dadurch gekennzeichnet, dass** diese aus der Desinfektionsmittelzusammensetzung gemäß einem der vorhergehenden Ansprüche unter Zugabe von Wasser erhältlich ist, wobei soviel Wasser zugegeben ist, bis eine Konzentration der Phenol-Verbindung von 0,2 bis 2 Gew.% resultiert.

15. Wässriges Desinfektionsmittelzusammensetzung gemäß Anspruch 14, **dadurch gekennzeichnet, dass** diese kleiner 1000 ppm Metallsalze der I und/oder II Hauptgruppe in der Summe und unabhängig hiervon kleiner 200 ppm der III Hauptgruppe des Periodensystems enthält.

16. Verwendung der flüssigen / wässrigen Desinfektionsmittelzusammensetzung gemäß zumindest einem der vorhergehenden Ansprüche zur Desinfektion von Tierställen und Tierfreilaufgehegen.

17. Verwendung der flüssigen / wässrigen Desinfektionsmittelzusammensetzung gemäß zumindest einem der Ansprüche 1 bis 15 zur Vernichtung von Dauerformen von Endoparasiten, insbesondere der sporulierten Oozysten von Sporentierchen, Isosporidien, Cryptosporidien, Eimerien und Dauerformen von Askariden und anderen im Darm parasitierenden Helminthen.
